# EUROPÄISCHE PATENTANMELDUNG

(11) **EP 1 380 458 A2**
(43) Veröffentlichungstag der Anmeldung: **14.01.2004**
(21) Anmeldenummer: 03015487.6
(22) Anmeldetag: 09.07.2003
(51) Int. Cl.: B60J 7/20

(54) **Fahrzeugdach**

(30) Priorität: 10.07.2002 DE 10231169
(71) Anmelder: Webasto Vehicle Systems International GmbH, 82131 Stockdorf (DE)
(72) Erfinder: Karami, Jadolah Malamiri, 85521 Ottobrunn (DE); Kiedl, Martin, 80992 München (DE); Pregler, Werner, 82166 Lochham (DE); Wingen, Bernhard, 83620 Feldkirchen (DE); Wittal, Roland, 80687 München (DE)
(74) Vertreter: Bedenbecker, Markus

(57) **Zusammenfassung**

Fahrzeugdach mit einem Deckel (10), der zum Verschließen und Freilegen einer Dachöffnung (11) verschiebbar ist, einem im Bereich des vorderen Dachöffnungsrandes angeordneten Windabweiser (16), der zwischen einer abgesenkten und einer ausgestellten Position schwenkbar gelagert und in Richtung der ausgestellten Position vorgespannt ist und der beim Schließen des Deckels gegen Federkraft abgesenkt wird, sowie einer Stellvorrichtung (24) zum Einstellen von Windabweiser-Zwischenpositionen. Die Stellvorrichtung weist mindestens einen Niederhalter, gegen den der Windabweiser bei Freigabe für eine Ausstellbewegung gehalten ist, und eine Verstellmechanik (35) auf, mittels deren der Niederhalter zur Vorgabe der Windabweiser-Zwischenpositionen höhenverstellbar ist. Der Niederhalter ist von einem mit dem Windabweiser verbundenen Ende mindestens eines flexiblen Elements (28, 28') gebildet, dessen anderes Ende mit einem dachfesten Bauteil (20) verbunden ist. Die Verstellmechanik (35) greift an einem zwischen diesen Enden liegenden Teil des flexiblen Elements an, und durch Betätigen der Verstellmechanik ist der Abstand zwischen den Enden des flexiblen Elements änderbar.

## Beschreibung

Die Erfindung betrifft ein Fahrzeugdach mit mindestens einem Deckel, der zum wahlweisen Verschließen und mindestens teilweisen Freilegen einer Dachöffnung verschiebbar ist, mit einem im Bereich des vorderen Randes der Dachöffnung angeordneten Windabweiser, der um eine dachfeste Achse zwischen einer abgesenkten Position und einer voll ausgestellten Position schwenkbar gelagert und in Richtung der voll ausgestellten Position federnd vorgespannt ist und der beim Schließen des Deckels gegen Federkraft abgesenkt wird, sowie mit einer Stellvorrichtung zum Einstellen von Zwischenpositionen des Windabweisers, wobei die Stellvorrichtung mindestens einen Niederhalter, gegen den der Windabweiser bei Freigabe für eine Ausstellbewegung mittels der Federkraft gehalten ist, und eine Verstellmechanik aufweist, mittels deren der Niederhalter zur Vorgabe der Zwischenpositionen des Windabweisers höhenverstellbar ist.

Ein gattungsgemäßes Fahrzeugdach ist aus DE 199 58 742 A1 bekannt. Bei dem bekannten Dach ist die Stellvorrichtung mit einer Hebelmechanik versehen, die zwei spiegelsymmetrische Stellwippen aufweist, deren eines Ende jeweils einen Anschlag für den Windabweiser bildet und deren anderes Ende an einen Steuerhebel angelenkt ist, der auf einer Abtriebswelle des Stellantriebs sitzt. Die bekannte Lösung erfordert im Bereich der Vorderkante der Dachöffnung einen verhältnismäßig großen Einbauraum, was dem Wunsch entgegensteht, die Dachöffnung möglichst groß auszubilden.

Es ist Aufgabe der vorliegenden Erfindung, ein Fahrzeugdach zu schaffen, das kompakter aufgebaut werden kann und bei dem insbesondere im Bereich der Vorderkante der Dachöffnung weniger zusätzlicher Einbauraum für die die Zwischenpositionen des Windabweisers erlaubende Stellvorrichtung erforderlich ist.

Diese Aufgabe wird erfindungsgemäß dadurch gelöst, dass der Niederhalter von einem mit dem Windabweiser in Verbindung stehenden Ende mindestens eines flexiblen Elements gebildet ist, dessen anderes Ende mit einem dachfesten Bauteil verbunden ist, dass die Verstellmechanik an einem zwischen diesen Enden liegenden Teil des flexiblen Elements angreift, und dass durch Betätigen der Verstellmechanik der Abstand zwischen den beiden Enden des flexiblen Elements änderbar ist.

Das Fahrzeugdach nach der Erfindung hat eine besonders einfache Mechanik mit kompaktem Aufbau. Die erfindungsgemäße Windabweiser-Stellvorrichtung lässt sich als Ganzes raumsparend im Bereich des vorderen Randes der Dachöffnung unterbringen. Des weiteren ist die Windabweiser-Stellvorrichtung mit relativ geringen Reibungsverlusten behaftet. Dadurch genügt für einen zugeordneten Stellmotor eine vergleichsweise niedrige Motorleistung.

Bevorzugte Ausgestaltungen der Erfindung ergeben sich aus den Unteransprüchen.

Das flexible Element kann einfach als Gurtband, Seil, Draht oder dergleichen ausgebildet sein.

Vorzugsweise ist das mit dem anderen Ende des flexiblen Elements verbundene dachfeste Bauteil ein vorderer Teil eines Dachrahmens, der den Rand der Dachöffnung mindestens entlang einem Teil seiner Erstreckung untergreift.

Ein besonders robuster Aufbau wird erhalten, wenn die Verstellmechanik in weiterer Ausgestaltung der Erfindung einen Schlitten und mindestens ein über den Schlitten verstellbares, mit dem flexiblen Element zusammenwirkendes Druckelement aufweist. Dabei ist der Schlitten zweckmäßig quer zur Fahrtrichtung verstellbar.

Zum Verstellen des Schlittens kann insbesondere ein eigener Stellmotor vorgesehen sein, der als Linearmotor ausgebildet sein kann. Es können aber auch Mittel vorgesehen sein, die eine drehende Motorbewegung in eine Linearbewegung des Schlittens umsetzen.

Vorzugsweise ist eine Führung vorhanden, welche die Zugrichtung, in welcher das flexible Element an dem Windabweiser angreift, unabhängig von der jeweiligen Stellung der Verstellmechanik konstant hält. Damit wird eine wohl definierte Kraftbeauschlagung des Windabweisers in allen Stellungen der Verstellmechanik gewährleistet. Für diesen Zweck kann die Führung einfach eine in einem dachfesten Bauteil ausgebildete Durchtrittsöffnung aufweisen, mit deren Wand das flexible Element an einer Stelle in Eingriff steht, die zwischen der Ankoppelstelle des flexiblen Elements an dem Windabweiser und der Eingriffsstelle der Verstellmechanik mit dem flexiblen Element liegt. Diese Durchtrittsöffnung kann zweckmäßig in einer Rippe in dem vorderen Teil des Dachrahmens ausgebildet sein.

Vorzugsweise sind mittels der Verstellmechanik gleichzeitig mehrere, insbesondere zwei, flexible Elemente verstellbar. Dadurch lässt sich der Aufwand für die Verstellmechanik besonders gering halten, während gleichwohl eine exakte Einstellung des Windabweisers mit Bezug auf das Fahrzeugdach sichergestellt ist. Es versteht sich, dass unter Umständen ein einziges, vorzugsweise in der Mitte des Windabweisers beziehungsweise eines Windabweiserblattes angreifendes, flexibles Element ausreichen kann. Andererseits können gegebenenfalls auch mehr als zwei flexible Elemente vorgesehen sein, die an in Abstand voneinander liegenden Stellen mit dem Windabweiser (dem Windabweiserblatt und/oder Windabweiserarmen) gekoppelt sind. Bei Verwendung von zwei oder mehr flexiblen Elementen ist es grundsätzlich auch möglich, jedem flexiblen Element eine eigene Verstellmechanik zuzuordnen.

Vorteilhaft ist ferner die maximale wirksame Länge des oder der flexiblen Elements beziehungsweise Elemente justierbar. Auf diese Weise kann für eine genau definierte Anfangs-Ausrichtung des Windabweisers gegenüber dem Fahrzeugdach gesorgt werden.

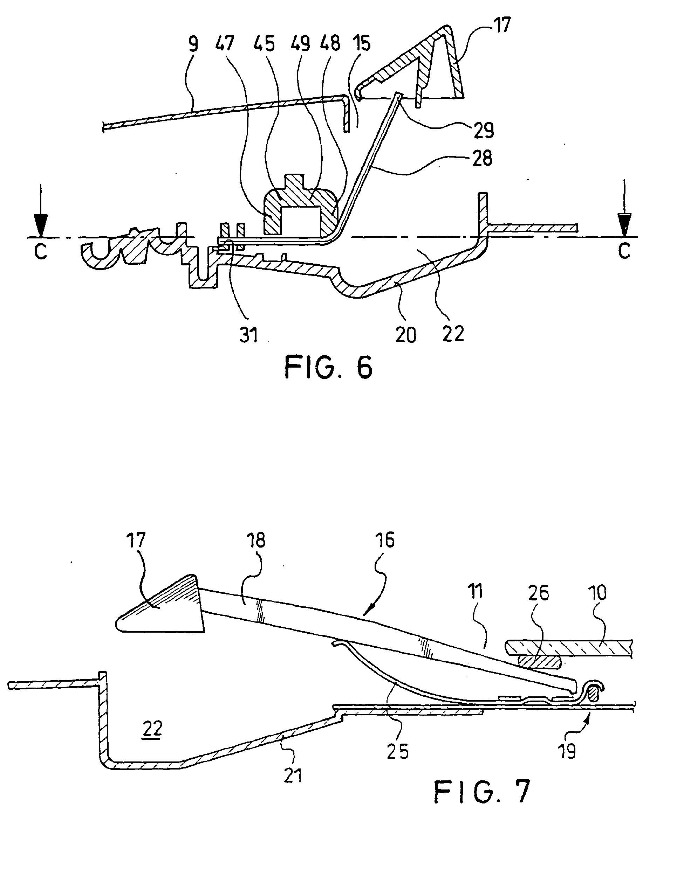

Im folgenden wird die Erfindung anhand der beigefügten Zeichnungen beispielhaft näher erläutert. Es zeigen:

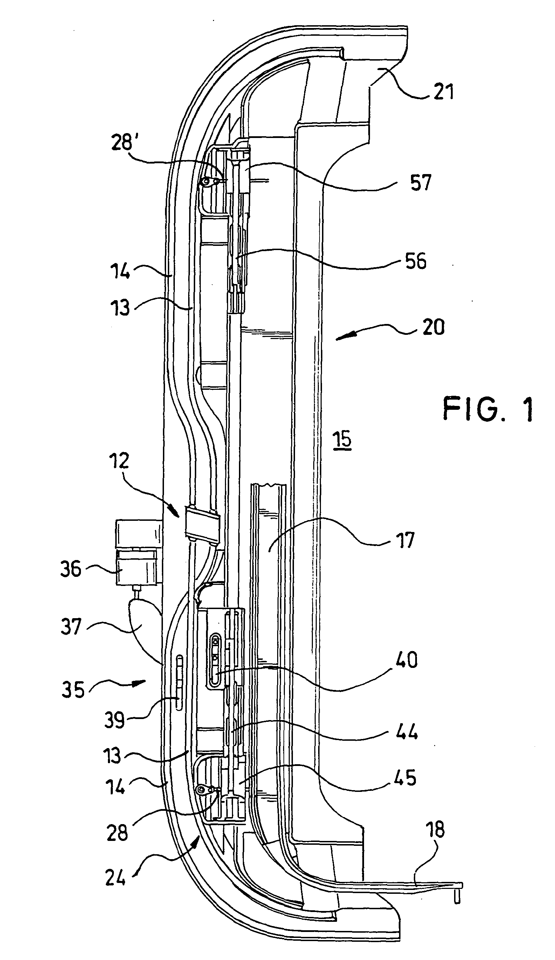

- Fig. 1: eine schematische Draufsicht auf den vorderen Teil des Dachrahmens und des Windabweisers eines erfindungsgemäßen Fahrzeugdaches,
- Fig. 2: eine schematische perspektivische Teilansicht der Anordnung der Fig. 1 mit Blickrichtung von vorne links,
- Fig. 3: in größerem Maßstab eine schematische Draufsicht auf einen Teil der Anordnung der Fig. 1,
- Fig. 4: eine schematische perspektivische Teilansicht der Anordnung der Fig. 1 mit Blickrichtung von hinten links,
- Fig. 5: einen Schnitt entlang der Linie C-C in Fig. 6,
- Fig. 6: einen Schnitt entlang der Linie B-B in Fig. 4, und
- Fig. 7: eine schematische Seitenansicht der Anordnung nach den Figuren 1 bis 6.
Bei dem in den Figuren dargestellten Ausführungsbeispiel des Fahrzeugdaches handelt es sich um ein Schiebe- oder Schiebehebedach mit einem nur in Fig. 7 angedeuteten verschiebbaren Deckel 10 zum wahlweisen Verschließen und mindestens teilweisen Freilegen einer Dachöffnung 11, die in einer festen Dachhaut 9 (Fig. 6) ausgebildet ist. Zum Verstellen des Deckels 10 kann ein insgesamt mit 12 bezeichneter Deckelantrieb bekannter Art vorgesehen sein. Zu diesem Antrieb 12 gehört beispielsweise ein Deckelantriebsmotor, der über in Kabelkanälen 13, 14 geführte drucksteife Antriebskabel mit Antriebsschlitten verbunden ist, die zu beiden Seiten der Dachöffnung 11 in seitlichen Führungsschienen in der Deckelverschieberichtung verschiebbar geführt sind und mit dem Deckel 10 in Antriebsverbindung stehen. Die Deckelverschieberichtung entspricht der Längsrichtung des mit dem Fahrzeugdach ausgestatteten Fahrzeugs, und die vorliegend verwendeten Begriffe "vorne" und "hinten" beziehen sich auf die normale Fahrtrichtung des Fahrzeugs.

Im Bereich des vorderen Randes 15 der Dachöffnung 11 befindet sich ein Windabweiser 16, der im gezeigten Ausführungsbeispiel ein parallel zu dem vorderen Dachöffnungsrand ausgerichtetes Windabweiserblatt 17 und zwei seitliche Windabweiserarme 18 aufweist, die an einem dachfesten Gelenk 19 um eine in Dachquerrichtung verlaufende Schwenkachse schwenkbar gelagert sind. In einer abgesenkten Position (Ruhestellung) taucht das Windabweiserblatt 17 unter dem Deckel 10 in einen von einem vorderen Teil 20 eines Dachrahmens 21 begrenzten Raum 22. In der in Fig. 7 gezeigten voll ausgestellten Position steht das Windabweiserblatt 17 oberhalb der Dachebene. Mittels einer Stellvorrichtung 24, die insgesamt gleichfalls im Bereich des vorderen Randes 15 der Dachöffnung 11 angeordnet ist, kann dafür gesorgt werden, dass der Windabweiser 16 Zwischenpositionen zwischen der Ruhestellung und der voll ausgestellten Position einnimmt.

Der Windabweiser 16 ist in Ausstellrichtung federnd vorgespannt, z.B. mittels als Blattfedern ausgebildeten Ausstellfedern 25, die sich von unten gegen die Windabweiserarme 18 andrücken und die Windabweiserarme um das Gelenk 19 nach oben zu schwenken suchen. Beim Schließen des Deckels 10 legen sich Nocken 26, die zusammen mit dem Deckel 10 verstellbar und beispielsweise an der Deckelunterseite angebracht sind, in üblicher Weise von oben gegen die Windabweiserarme 18 an, um den Windabweiser 16 über den Deckelantrieb 12 entgegen der Kraft der Ausstellfedern 25 abzusenken. Auf diese Weise wird in der Schließstellung des Deckels 10 der Windabweiser 16 entgegen Federvorspannung in seiner Ruhestellung unterhalb des Deckels 10 gehalten. Beim Öffnen des Deckels 10 werden dagegen die Windabweiserarme 18 durch den Deckel 10 freigegeben, so dass die Ausstellfedern 25 den Windabweiser 16 nach oben schwenken können. Dabei ist die Ausstellbewegung des Windabweisers 16 durch die nachstehend näher erläuterte Stellvorrichtung 24 begrenzt.

Die der Vorgabe der Größe der Ausstellbewegung des Windabweisers 16 dienende Stellvorrichtung 24 weist vorliegend zwei flexible Elemente 28, 28' auf, die im veranschaulichten Ausführungsbeispiel die Form eines Draht- oder Seilstückes haben, bei denen es sich aber auch um Gurtbänder oder dergleichen handeln kann. Das jeweils eine Ende 29 der flexiblen Elemente 28, 28' ist, wie insbesondere aus Fig. 6 hervorgeht, an der Unterseite des Windabweiserblattes 17 angebracht. Das andere Ende 30 der flexiblen Elemente 28, 28' ist mit dem vorderen Teil 20 des Dachrahmens 21 verbunden. Vorzugsweise sind die flexiblen Elemente 28, 28' an dem Windabweiserblatt 17 und/oder an dem Dachrahmen 21 so angebracht, dass ein Einstellen der maximalen wirksamen Länge der Elemente 28 und damit ein Justieren beispielsweise der maximalen Ausstellhöhe des Windabweisers 16 möglich ist. Bei dem gezeigten Ausführungsbeispiel ist das Ende 30 durch eine Öffnung 31 eines an dem Rahmenvorderteil 20 angebrachten Haltebockes 32 gesteckt, und es ist dort mittels einer in den Haltebock 32 eingeschraubten Klemmschraube 33 oder dergleichen fixiert.

Zu der Stellvorrichtung 24 gehört ferner eine insgesamt mit 35 bezeichnete Verstellmechanik. Die Verstellmechanik 35 weist einen eigenen, das heißt unabhängig von dem Deckelantrieb betätigbaren, Stellmotor 36 auf. Die Verstellmechanik 35 ist ferner mit einem mit der Abtriebsseite des Stellmotors 36 verbundenen Schlitten 37 versehen, der parallel zu dem vorderen Rand 15 der Dachöffnung 11 verschiebbar ist. Der Stellmotor 36 ist zweckmäßig als Linearmotor ausgebildet. Der Stellmotor 36 kann aber beispielsweise auch mit einer sich drehenden Abtriebsspindel versehen sein, die mit einer an dem Schlitten 37 angebrachten Spindelmutter in Gewindeeingriff steht. Zweckmäßig ist der Stellmotor 36 im mittleren Bereich des vorderen Teils 20 des Dachrahmens 21 angeordnet. Der Schlitten 37 erstreckt sich unter das Rahmenvorderteil 20, und er ist über Parallelführungen 39, 40 mit Bezug auf das Rahmenvorderteil 20 in Dachquerrichtung begrenzt verschiebbar.

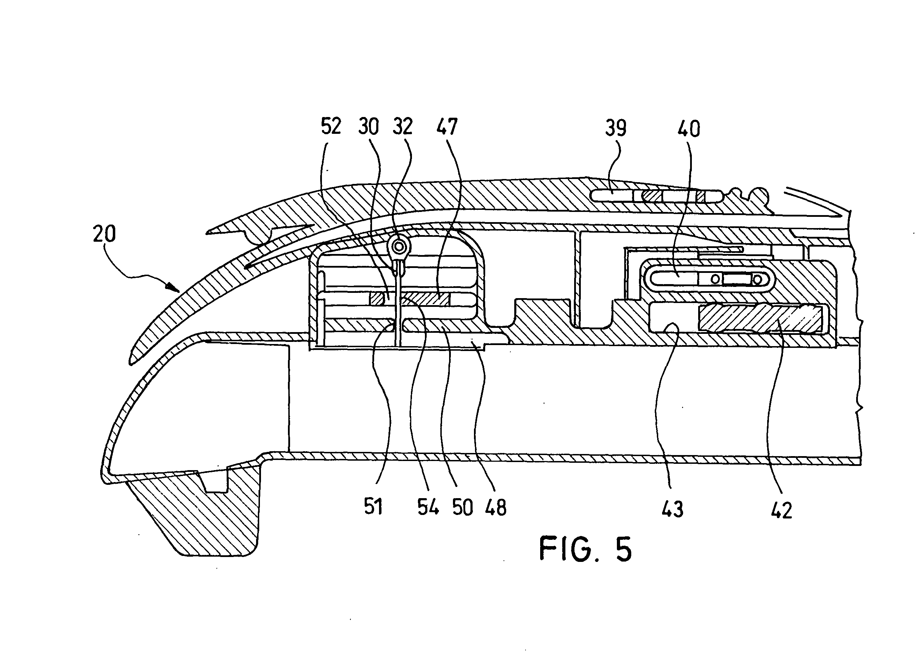

Von dem Schlitten 37 steht ein Mitnehmer 42 hoch, der in einer Führungsöffnung 43 des Rahmenvorderteils 20 in Dachquerrichtung verstellbar geführt ist (Fig. 5). Ein Druckelement 45, das gleichfalls Teil der Verstellmechanik 35 ist, steht über eine Koppelstange 44 mit dem Mitnehmer 42 in Antriebsverbindung. Das Druckelement 45 hat einen vorderen Schenkel 47 und einen hinteren Schenkel 48, die zusammen mit einem Verbindungssteg 49 einen, in Dachquerrichtung gesehen, im wesentlichen umgekehrt U-förmigen Querschnitt bestimmen. Eine in Dachquerrichtung verlaufende Rippe 50 des Rahmenvorderteils 20 erstreckt sich in den Raum zwischen den beiden Schenkeln 47, 48. In der Rippe 50 ist eine quer zu dem Windabweiserblatt 17 verlaufende Durchtrittsöffnung 51 für das flexible Element 28 ausgebildet.

Das flexible Element 28 verläuft von dem Windabweiserblatt 17 ausgehend nach vorne schräg abwärts zur Unterseite des hinteren Schenkels 48 des Druckelements 45, wo es in eine im wesentlichen horizontale Richtung umgelenkt wird. Es durchquert dann die Öffnung 51 in der Rippe 50. Auf diese Weise wird die Zugrichtung des flexiblen Elements 28 zum Windabweiserblatt 17 konstant ) gehalten. Von der Öffnung 51 erstreckt sich das flexible Element 28 dann durch einen Spalt 52 des vorderen Druckelement-Schenkels 47 hindurch zu dem Haltebock 32. Wie insbesondere aus Fig. 5 zu erkennen ist, liegt der Schenkel 47 in Deckelverschieberichtung in Abstand sowohl von dem Haltebock 32 als auch von der dachfesten Rippe 50.

### Die beschriebene Anordnung in folgender Weise:

In der Schließstellung des Deckels 10 legen sich die mit dem Deckel mitbewegbaren Nocken 26 gegen die Windabweiserarme 18 an. Der Windabweiser 16 wird von dem Deckel 10 entgegen der von den Federn 25 ausgeübten Vorspannung in der eingefahrenen Ruhestellung unterhalb des Deckels 10 gehalten. Die flexiblen Elemente 28, 28' sind entspannt, und sie können sich in dem Raum 22 über dem vorderen Dachrahmenteil 20 raumsparend zusammenlegen.

Wird der Deckel 10 mittels des Deckelantriebs 12 nach hinten verschoben, geben die mit den Windabweiserarmen 18 zusammenwirkenden deckelfesten Nocken 26 den Windabweiser 16 für eine Austellbewegung frei. Der Windabweiser 16 wird unter dem Einfluss der auf ihn einwirkenden Ausstellfedern 25 so weit ausgestellt, wie dies die Stellvorrichtung 24 zulässt.

Wenn dabei der Schlitten 37 seine in den Figuren veranschaulichte eine Endstellung einnimmt, wird das flexible Element 28 nicht von dem Druckelement 45 ausgelenkt. Das flexible Element 28 erstreckt sich vielmehr, wie in Fig. 5 dargestellt, geradlinig zwischen dem Haltebock 32 und dem hinteren Schenkel 48 des Druckelements 45. Entsprechendes gilt für das flexible Element 28' an der anderen Seite des Windabweisers 16. Der Windabweiser 16 nimmt seine maximal ausgestellte Lage ein. Letztere kann beispielsweise so gewählt sein, dass das Windabweiserblatt 17 vom Fahrtwind nicht nur überströmt wird, sondern zwecks Minimierung von Wummergeräuschen ein Teilluftstrom auch unter dem Windabweiserblatt 17 durchgeleitet wird.

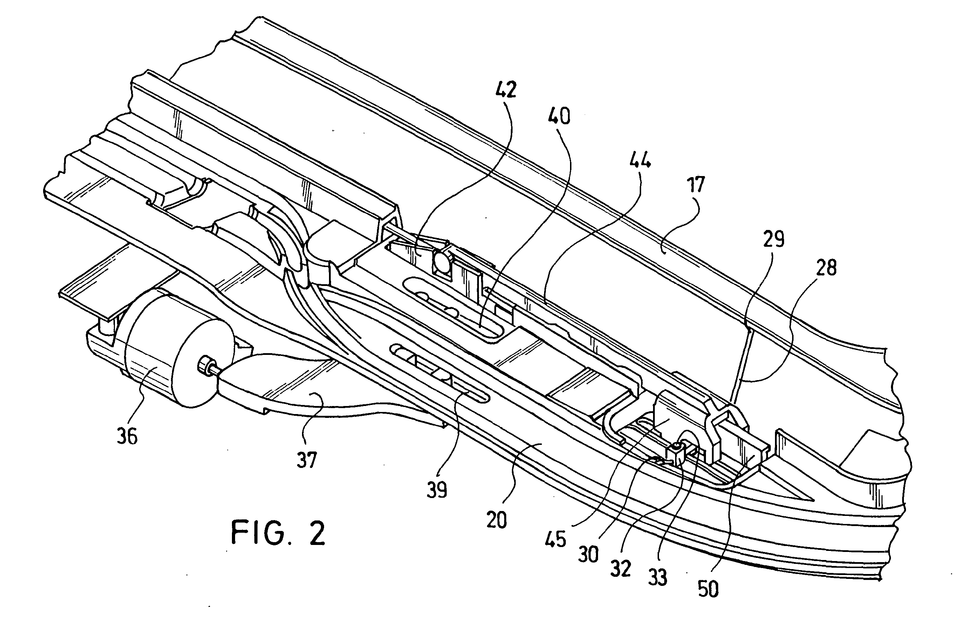

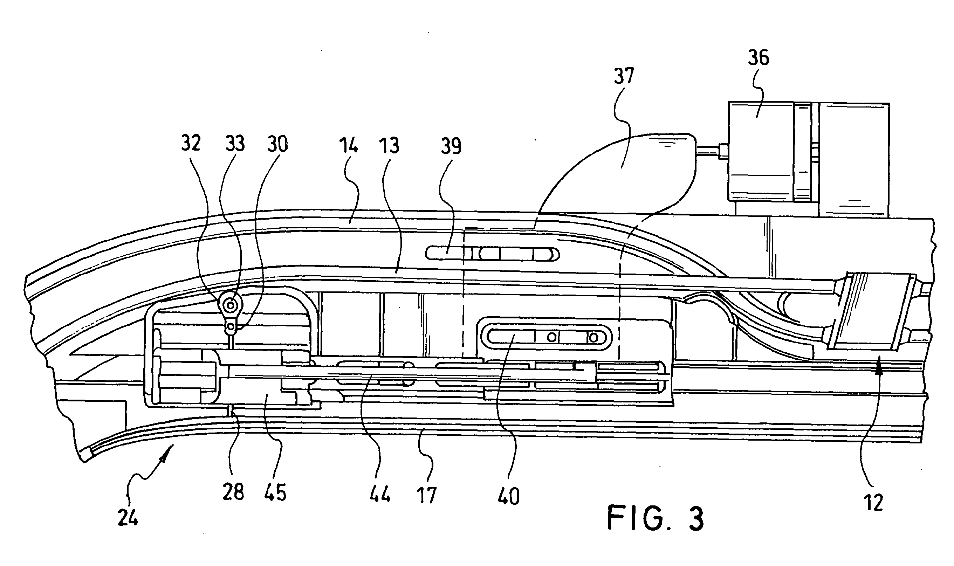

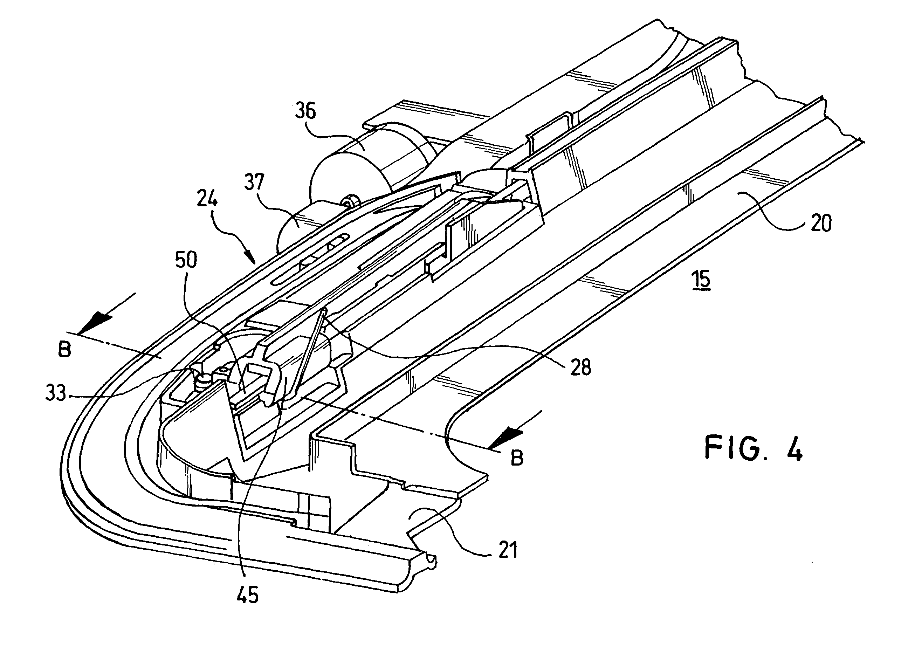

Soll dagegen der Austellwinkel des Windabweisers 16 verringert werden, wird der unabhängig von dem Deckelantrieb 12 ansteuerbare Stellmotor 36 aktiviert. Der Schlitten 37 wird dadurch in Querrichtung verschoben. Über die Kopppelstange 44 wird das Druckelement 45 (in Fig. 2 nach rechts, in den Figuren 3 bis 5 nach links) mitgenommen. Aufgrund der Verstellbewegung des Druckelements 45 übt eine abgerundete Begrenzungswand 54 des Spaltes 52 in dem vorderen Schenkel 47 des Druckelements 45 Druck auf das flexible Element 28 aus. Das flexible Element 28 wird im Bereich zwischen der Durchtrittsöffnung 51 der dachfesten Rippe 50 und dem Haltebock 32 ausgelenkt. Dadurch wird der Abstand zwischen den beiden Enden 29, 30 des flexiblen Elements 28 verkürzt.

Die Verstellbewegung des Schlittens 37 wird ferner über ein Koppelelement 56, das gegebenenfalls mit der Kopppelstange 44 einstückig verbunden sein kann, auch auf ein dem Druckelement 45 entsprechendes weiteres Druckelement 57 übertragen, das mit dem flexiblen Element 28' zusammenwirkt. Letzteres ist in der vorstehend für das Element 28 erläuterten Weise gehalten und geführt, und es wird im Zuge der Verstellung des Schlittens 37 in entsprechender Weise ausgelenkt.

Der Windabweiser 16 wird daher, nachdem er durch den Deckel 10 freigegeben ist, mittels der Ausstellfedern 25 nur um ein entsprechend geringeres Maß ausgestellt, zum Beispiel in eine mittlere Position, in welcher das Windabweiserblatt 17 vom Fahrtwind nur überströmt, nicht aber auch unterströmt wird.

Die Auslegung kann so getroffen sein, dass der vorzugsweise elektrische Stellmotor 36 von Hand aus- und eingeschaltet wird. Stattdessen oder als zusätzliche Wahlmöglichkeit kann aber auch für eine automatische Ansteuerung des Stellmotors 36 in Abhängigkeit beispielsweise von der Fahrtgeschwindigkeit und/oder von dem Öffnungsgrad des Deckels 10 gesorgt sein.

### Bezugszeichenliste

- 9: feste Dachhaut
- 10: Deckel
- 11: Dachöffnung
- 12: Deckelantrieb
- 13, 14: Kabelanal
- 15: vorderer Rand von 11
- 16: Windabweiser
- 17: Windabweiserblatt
- 18: Windabweiserarm
- 19: Gelenk
- 20: Rahmenvorderteil
- 21: Dachrahmen
- 22: Raum
- 24: Stellvorrichtung
- 25: Ausstellfeder
- 26: Nocken
- 28, 28': flexibles Element
- 29, 30: Ende von 28
- 31: Öffnung
- 32: Haltebock
- 33: Klemmschraube
- 35: Verstellmechanik
- 36: Stellmotor
- 37: Schlitten
- 39, 40: Parallelführung
- 42: Mitnehmer
- 43: Führungsöffnung
- 44: Koppelstange
- 45: Druckelement
- 47: vorderer Schenkel von 45
- 48: hinterer Schenkel von 45
- 49: Verbindungssteg
- 50: Rippe
- 51: Durchtrittsöffnung
- 52: Spalt
- 54: Begrenzungswand
- 56: Koppelelement
- 57: Druckelement

## Patentansprüche

1. Fahrzeugdach mit mindestens einem Deckel (10), der zum wahlweisen Verschließen und mindestens teilweisen Freilegen einer Dachöffnung (11) verschiebbar ist, mit einem im Bereich des vorderen Randes (15) der Dachöffnung angeordneten Windabweiser (16), der um eine dachfeste Achse zwischen einer abgesenkten Position und einer voll ausgestellten Position schwenkbar gelagert und in Richtung der voll ausgestellten Position federnd vorgespannt ist und der beim Schließen des Deckels gegen Federkraft abgesenkt wird, sowie mit einer Stellvorrichtung (24) zum Einstellen von Zwischenpositionen des Windabweisers, wobei die Stellvorrichtung mindestens einen Niederhalter, gegen den der Windabweiser bei Freigabe für eine Ausstellbewegung mittels der Federkraft gehalten ist, und eine Verstellmechanik (35) aufweist, mittels deren der Niederhalter zur Vorgabe der Zwischenpositionen des Windabweisers höhenverstellbar ist, **dadurch gekennzeichnet, dass** der Niederhalter von einem mit dem Windabweiser (16) in Verbindung stehenden Ende (29) mindestens eines flexiblen Elements (28, 28') gebildet ist, dessen anderes Ende (30) mit einem dachfesten Bauteil (20) verbunden ist, dass die Verstellmechanik (35) an einem zwischen diesen Enden liegenden Teil des flexiblen Elements angreift, und dass durch Betätigen der Verstellmechanik der Abstand zwischen den beiden Enden des flexiblen Elements änderbar ist.

2. Fahrzeugdach nach Anspruch 1, **dadurch gekennzeichnet, dass** das flexible Element (28, 28') als Gurtband, Seil oder Draht ausgebildet ist.

3. Fahrzeugdach nach einem der vorhergehenden Ansprüche, dadurch gekenrizeichnet, dass das mit dem anderen Ende des flexiblen Elements (28, 28') verbundene dachfeste Bauteil ein vorderer Teil (20) eines den Rand der Dachöffnung (11) mindestens entlang einem Teil seiner Erstreckung untergreifenden Dachrahmens (21) ist.

4. Fahrzeugdach nach einem der vorhergehenden Ansprüche, **dadurch gekennzeichnet, dass** die Verstellmechanik (35) einen Schlitten (37) und mindestens ein über den Schlitten verstellbares, mit dem flexiblen Element (28, 28') zusammenwirkendes Druckelement (45, 57) aufweist.

5. Fahrzeugdach nach Anspruch 4, **dadurch gekennzeichnet, dass** der Schlitten (37) quer zur Fahrtrichtung verstellbar ist.

6. Fahrzeugdach nach einem der vorhergehenden Ansprüche, **dadurch gekennzeichnet, dass** zum Verstellen des Schlittens (37) ein eigener Stellmotor (36) vorgesehen ist.

7. Fahrzeugdach nach Anspruch 6, **dadurch gekennzeichnet, dass** der Stellmotor (36) als Linearmotor ausgebildet ist.

8. Fahrzeugdach nach Anspruch 6 oder 7, **dadurch gekennzeichnet, dass** der Stellmotor (36) in Abhängigkeit von der Fahrtgeschwindigkeit und/oder von dem Öffnungsgrad des Deckels (10) angesteuert ist.

9. Fahrzeugdach nach einem der vorhergehenden Ansprüche, **gekennzeichnet durch** eine Führung (51), welche die Zugrichtung, in welcher das flexible Element (28, 28') an dem Windabweiser (16) angreift, unabhängig von der jeweiligen Stellung der Verstellmechanik (35) konstant hält.

10. Fahrzeugdach nach Anspruch 9, **dadurch gekennzeichnet, dass** die Führung (51) eine in einem dachfesten Bauteil (50) ausgebildete Durchtrittsöffnung aufweist, mit deren Wand das flexible Element (28, 28') an einer Stelle in Eingriff steht, die zwischen der Ankoppelstelle des flexiblen Elements an dem Windabweiser (16) und der Eingriffsstelle (52) der Verstellmechanik (35) mit dem flexiblen Element liegt.

11. Fahrzeugdach nach Ansprüchen 3 und 10, **dadurch gekennzeichnet, dass** die Durchtrittsöffnung in einer Rippe (50) in dem vorderen Teil (20) des Dachrahmens (21) ausgebildet ist.

12. Fahrzeugdach nach einem der vorhergehenden Ansprüche, **dadurch gekennzeichnet, dass** mittels der Verstellmechanik (35) gleichzeitig mehrere flexible Elemente (28, 28') verstellbar sind.

13. Fahrzeugdach nach einem der vorhergehenden Ansprüche, **dadurch gekennzeichnet, dass** die maximale wirksame Länge des flexiblen Elements (28, 28') justierbar ist.
